# EUROPÄISCHE PATENTSCHRIFT

(11) **EP 0 367 104 B1**
(45) Veröffentlichungstag und Bekanntmachung des Hinweises auf die Patenterteilung: **08.09.1993**
(21) Anmeldenummer: 89119892.1
(22) Anmeldetag: 26.10.1989
(51) Int. Cl.: C08G 77/48, C08G 77/54, C08G 77/58

(54) **Organopolysiloxan-Thioharnstoff-Derivate, Verfahren zu ihrer Herstellung und Verwendung**
Organopolysiloxane thiourea derivatives, process for preparing these and their use
Produits dérivés d'organopolysiloxane-thiourée, procédé pour leur fabrication et leur emploi

(30) Priorität: 04.11.1988 DE 3837415
(43) Veröffentlichungstag der Anmeldung: 09.05.1990
(73) Patentinhaber: Degussa Aktiengesellschaft, 60311 Frankfurt (DE)
(72) Erfinder: Panster, Peter, Dr., D-6458 Rodenbach (DE); Deschler, Ulrich, Dr., D-6450 Hanau 9 (DE)

(56) Entgegenhaltungen:
- EP-A- 0 280 946
- EP-A- 0 282 737
- DE-A- 1 495 453
- DE-A- 3 120 214
- US-A-32 089 71

## Beschreibung

Gegenstand der Erfindung sind neue, in Wasser und organischen Lösungsmitteln unlösliche Thioharnstoff-Derivate auf Organopolysiloxan-Basis. Die polymeren Thioharnstoffe werden vor allem als Metalladsorber eingesetzt. Verfahren zur Herstellung und Verwendung der neuen Produkte werden beschrieben.

In der chemischen Synthese und Anwendung finden verstärkt Reagenzien auf Basis organischer Polymerer Verwendung. z. B. als Ionenaustauscher, Katalysatorträger, Metalladsorber, Enzymträger oder Träger von funktionellen Gruppen. Beispiele hierfür sind z. B. in Chem. Ing. Tech. Bd. 51, Heft 7. S. 728 (1979). in Chem. Rev. Bd. 81, S. 557 (1981) oder in Annu. Rep. Prog. Chem. Sect. B 83, S. 283 (1986) publ. (1987) beschrieben.

Bei Einsatz dieser Verbindungen erfüllt die organische Polymermatrix manchmal nicht die an sie gestellten Anforderungen in bezug auf thermische und mechanische Stabilität, Inertness gegenüber chemischen Angriffen, Zugänglichkeit der funktionellen Gruppen und Löslichkeit im verwendeten Solvens. Diese Schwierigkeiten könnten vermieden werden, wenn anorganische Polymersysteme, wie z. B. Kieselgel, Aluminiumoxid oder Titandioxid, als Träger verwendbar werden würden.

Derartige Systeme besitzen die Vorzüge einer festliegenden starren Struktur, Unquellbarkeit, hohe Temperatur- und Alterungsbeständigkeit, Unlöslichkeit und leichte Zugänglichkeit der vorhandenen funktionellen Gruppen. Unter diesen Gesichtspunkten ist es verständlich, daß anorganische Träger bereits mit geeigneten funktionellen Gruppen versehen wurden, wie dies z. B. in der DE-OS 24 33 409 beschrieben ist. Als gravierender Nachteil macht sich hier jedoch die geringe Funktionalisierbarkeit bemerkbar.

Nach einem neuen Konzept der Hydrolyse und Polykondensation von geeigneten organofunktionellen Silanen können jedoch inzwischen entsprechende organofunktionelle Polysiloxane erhalten werden, die einerseits eine hohe Funktionalitat und andererseits gute Matrixeigenschaften wie im Falle anorganischer Polymerer aufweisen. Ein Überblick über derartige Polymere wird z. B. in der Angewandten Chemie Bd. 98, S. 237 (1986) gegeben.

Copolykondensate mit Harnstoffgruppen aufweisenden Silsesquioxan-Monomereinheiten sind bereits aus der DE-OS 14 95 453 bekannt.

In der DE-OS 37 06 523 sind ferner Thioharnstoffderivate von Organopolysiloxanen beschrieben, welche Acylreste aufweisen. Letztere komplexieren Metalle mit relativ fester Bindung, was z. B. eine Regeneration mit Säuren erschwert.

Aus der DE-A-1 495 453 sind Harnstoffgruppen-enthaltende Polysiloxane bekannt, die als Klebstoffe, Überzeige und Schlichten für silikatische Werkstoffe verwendet werden.

Schließlich sind in der US-PS 3 878 168 noch Polysiloxane mit Harnstoff- und Thioharnstoffgruppen tragenden Einheiten angegeben; sie weisen keine Silsesquioxangruppen auf, sondern sind linear.

Aufgabe der hier vorliegenden Erfindung war es, die Palette der verfügbaren Organopolysiloxane zu erweitern und neue Derivate bereitzustellen, die als funktionelle Gruppe eine Thioharnstoffgruppe aufweisen. Die Thioharnstoffe sollen als Metalladsorber eingesetzt werden können.

Die Aufgabe wurde dadurch gelöst, daß neue Organopolysiloxan-Thioharnstoff-Derivate entwickelt wurden, die dadurch gekennzeichnet sind, daß sie aus Einheiten der Formel (1) 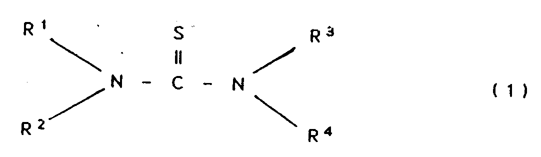
aufgebaut sind, wobei
R¹ für eine Gruppe der Formel 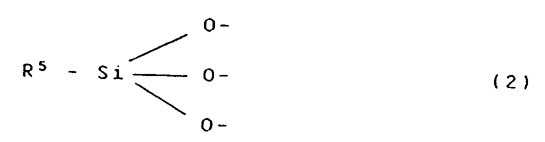
steht, in der R⁵ direkt an das Stickstoffatom gebunden ist und eine Alkylengruppe mit 1 bis 10 C-Atomen oder eine Cycloalkylengruppe mit 5 bis 8 C-Atomen oder ein Rest der Formel 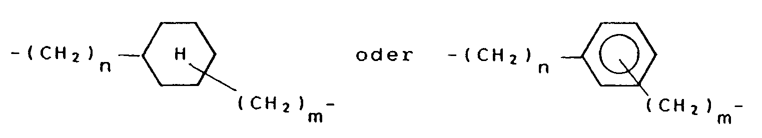
mit
- n = 1 - 6: (Anzahl stickstoffständiger Methylengruppen)
- m = 0 - 6: (Anzahl siliciumständiger Methylengruppen)
ist,
wobei R² dieselbe Bedeutung wie R¹ hat oder für H steht,
R³ und R⁴ ebenfalls dieselbe Bedeutung wie R¹ haben oder für H oder eine lineare oder verzweigte Alkylgruppe mit 1 bis 5 C-Atomen stehen und gleich oder verschieden sein können und wobei stets mindestens zwei, aber höchstens drei Gruppen nach Formel (2) an die Einheiten nach Formel (1) gebunden sind und die freien Valenzen der an das Siliciumatom gebundenen Sauerstoffatome wie bei Kieselsäuregerüsten durch Siliciumatome weiterer Gruppen der Formel (2) und/oder über die Metallatome in einem oder mehreren vernetzenden Brückengliedern der folgenden allgemeinen Formeln (3) 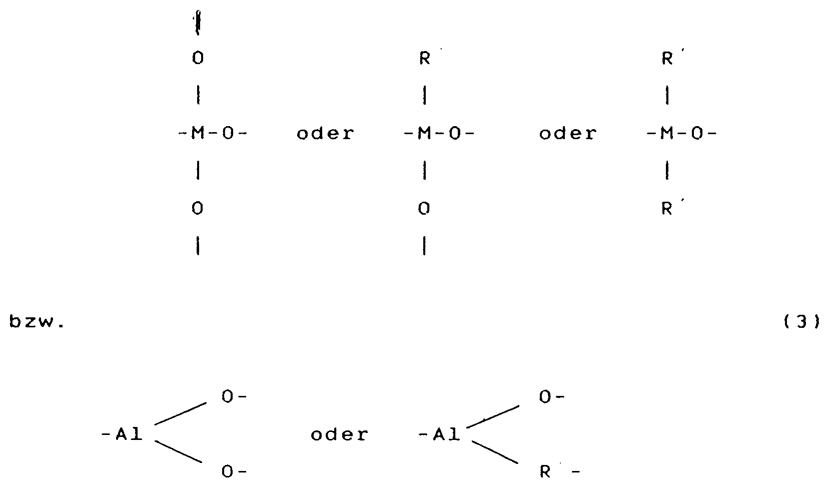
abgesättigt sind, wobei M ein Silicium-, Titan- oder Zirkoniumatom und R eine Phenylgruppe oder eine lineare oder verzweigte Alkylgruppe mit 1 bis 5 C-Atomen ist und das Verhältnis der Siliciumatome aus den Gruppen der allgemeinen Formel (2) zu den Metallatomen in den Brückengliedern nach Formel (3) 1 : 0 bis 1 : 10 beträgt.

Die monomeren Vorstufen der polymeren Thioharnstoffe sind prinzipiell bekannte Verbindungen und z. B. in der DE-OS 34 24 534 und in der Patentanmeldung P 38 21 465.2 beschrieben. Ein typisches Monomer ist z. B.

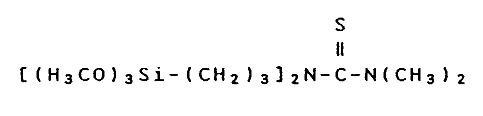

Die Zusammensetzung der daraus herstellbaren Polymereinheiten läßt sich durch die Formel 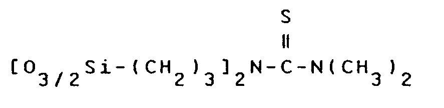
beschreiben.

Im Falle der Herstellung sog. vernetzter Derivate können diese natürlich in unterschiedlichen Formen vorliegen, auch wenn von der chemischen Zusammensetzung her kein Unterschied gegeben ist. Einerseits können die Gruppen nach Formel (1) und Formel (3) rein statistisch verteilt nebeneinander vorliegen oder sie können in Form von Blöcken oder aber auch sowohl in Form von Blöcken als auch statistisch verteilt nebeneinander vorliegen.

Jede dieser möglichen Formen wird nach einem bestimmten Verfahren erhalten, das auch Gegenstand der Erfindung ist und nachfolgend näher beschrieben wird.

Besondere Vorteile bezüglich der Verfügbarkeit der Ausgangsmaterialien und der stofflichen Eigenschaften wurden mit Polymeren erreicht, in denen die Einheiten nach Formel (2) eine Gruppe der Formel 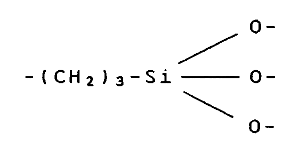
darstellen.

Gegenstand der Erfindung sind auch Verfahren zur Herstellung der erfindungsgemäßen Polymeren. Ein Verfahren sieht vor, daß man eine monomere Thioharnstoffverbindung der Formel 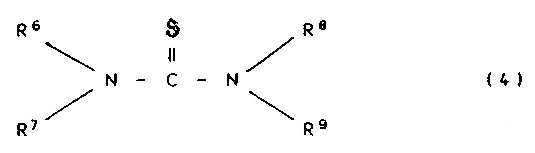
wobei R⁶ für eine Gruppe der allgemeinen Formel

-R⁵ - Si(OR¹⁰)₃ (5)

steht und R⁵ dieselbe Bedeutung wie in Formel (2) hat, R¹⁰ für eine lineare oder verzweigte Alkylgruppe mit 1 bis 5 C-Atomen steht,
gegebenenfalls nach Zusatz einer oder mehrerer Vernetzer der allgemeinen Formel 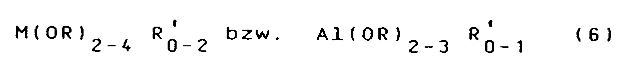
wobei M ein Silicium-, Titan- oder Zirkonatom, R' eine lineare oder verzweigte Alkylgruppe mit 1 bis 5 C-Atomen oder eine Phenylgruppe ist und R eine lineare oder verzweigte Alkylgruppe mit 1 bis 5 C-Atomen bedeutet, wobei das Verhältnis der Siliciumatome aus den Gruppen der allgemeinen Formel (5) zu den Metallatomen der Formel (6) 1 : 0 bis 1 : 10 beträgt, in einem weitgehend wassermischbaren, aber den Thioharnstoff nach Formel (4) und Vernetzer nach Formel (6) lösenden üblichen Lösungsmittel auflöst und der Lösung unter Rühren eine zumindest für die vollständige Hydrolyse und Kondensation ausreichende Menge Wasser zufügt, das Reaktionsgemisch unter Weiterrühren bei einer bestimmten Temperatur im Bereich von Raumtemperatur bis 200° C geliert, den sich bildenden Feststoff gegebenenfalls nach Zusatz weiteren Lösungsmittels oder Wassers noch bis zu 48 Stunden bei Raumtemperatur bis 200° C, bei Normaldruck oder einem Druck, welcher der Summe der Partialdrucke bei der jeweiligen Temperatur entspricht, rührt, dann das Copolykondensat nach gängigen Techniken von der flüssigen Phase abtrennt, gegebenenfalls wäscht, bei Raumtemperatur bis 250° C, gegebenenfalls unter Schutzgasatmosphäre oder im Vakuum trocknet, gegebenenfalls anschließend 1 bis 100 Stunden bei Temperaturen von 150 bis 300° C an der Luft, unter Schutzgasatmosphäre oder im Vakuum tempert, gegebenenfalls mahlt und/oder klassifiziert.

Prinzipiell können als Ausgangsstoffe für das Verfahren anstelle der Alkoxysilylverbindungen auch die entsprechenden Halogenid- oder Phenoxyverbindungen eingesetzt werden, doch bietet deren Verwendung keine Vorteile, sondern kann, z. B. im Fall der Chloride, Schwierigkeiten durch die bei der Hydrolyse freiwerdende Salzsäure verursachen.

Die Hydrolyse der Ausgangsstoffe und gegebenenfalls Vernetzer muß in einem weitgehend wassermischbaren, aber die Ausgangsstoffe lösenden Lösungsmittel durchgeführt werden. Bevorzugt werden dabei Alkohole verwendet, die zu den Alkoxygruppierungen an den monomeren Vorstufen der Ausgangsstoffe bzw. an den Metallatomen der gegebenenfalls eingesetzten Vernetzer korrespondieren. Besonders geeignet sind lineare oder verzweigte Alkohole mit 1 bis 5 C-Atomen, wie Methanol, Ethanol, n- und i-Propanol, n- und i-Butanol oder n-Pentanol allein oder in Mischung. Anstelle von Alkoholen können auch andere polare Lösungsmittel, die weitgehend wassermischbar sind, verwendet werden, doch erweist sich dies aus verfahrenstechnischen Gründen wegen der mit dem hydrolytisch abgespaltenen Alkohol zustandekommenden Lösungsmittelgemische als nicht so günstig.

Bevorzugt führt man die Hydrolyse mit einem überschuß an Wasser über die stöchiometrisch erforderliche Menge hinaus durch. Die in der Praxis zur Hydrolyse eingesetzte Menge Wasser hängt von der Hydrolysegeschwindigkeit der jeweils verwendeten Monomeren derart ab, daß mit zunehmender Menge Wasser und bei höheren Temperaturen raschere Hydrolyse erfolgt.

Allerdings kann eine Obergrenze durch auftretende Entmischung und Ausbildung eines Zweiphasensystems gegeben sein. Grundsätzlich ist eine Hydrolyse in homogener Lösung vorzuziehen.

Der Polykondensationsprozeß selbst kann bei verschiedenen Temperaturen durchgeführt werden. Nachdem die Polykondensation bei höheren Temperaturen am schnellsten verläuft, ist es am einfachsten, diese bei Rückflußtemperatur oder knapp darunter erfolgen zu lassen. Prinzipiell können Hydrolyse und/oder Polykondensation auch bei höheren Temperaturen. d. h. unter Druck durchgeführt werden. Bei der Polykondensation kann das Reaktionsgemisch zu einer festen Masse erstarren. Aus diesem Grunde ist es angebracht, eine entsprechende Menge Lösungsmittel oder Wasser zur Verdünnung zuzusetzen. Das Lösungsmittel wird dabei in der Regel dasselbe sein, das schon bei der Hydrolyse der Silane eingesetzt wurde, d. h. bevorzugt wird ein niederer Alkohol mit 1 bis 5 C-Atomen verwendet. Alternativ zu der Verdünnung mit einem Lösungsmittel kann natürlich auch mit Wasser verdünnt werden. Was im Einzelfall verwendet wird, hängt auch davon ab, welche physikalischen Eigenschaften das herzustellende Organopolysiloxan haben soll. Auch durch die Dauer und Temperatur der bis zu 48-stündigen Nachreaktion kann hierauf Einfluß genommen werden. In der Regel führt eine Nachreaktion bei höherer Temperatur zu einer Erhöhung der mechanischen Stabilität und zu einer gefestigten Struktur des gebildeten Produktes.

Die Abtrennung des gebildeten Produktes kann nach gängigen Techniken, wie Filtrieren, Dekantieren oder Zentrifugieren oder auch durch Abdestillieren der flüssigen Phase erfolgen. Die Waschung des gebildeten Feststoffs wird bevorzugt mit dem bei der Fällung verwendeten Lösungsmittel oder mit Wasser durchgeführt.

Die Maßnahme der Temperung erweist sich im Hinblick auf eine Erhöhung der physikalischen Stabilität der Polykondensate oft als sinnvoll.

Das getrocknete bzw. getemperte Produkt kann in üblichen Vorrichtungen in verschiedene Korngrößen klassifiziert werden. Von den einzelnen Aufarbeitungsmaßnahmen Waschung, Trocknung, Temperung und Klassifizierung kann die eine oder andere entfallen oder in einer anderen Reihenfolge durchgeführt werden. Eine Klassifizierung kann z. B. auch an feuchtem, gegebenenfalls vorher getrockneten oder getemperten Produkt durchgeführt werden.

Die Dauer der Hydrolyse hängt von der Hydrolyseneigung von Ausgangsstoff gemäß Formel (4) und/oder Vernetzer gemäß Formel (6) ab. Die Hydrolysebereitschaft und damit -geschwindigkeit hängt wiederum insbesondere von der Art der Silicium-, bzw. Titan-, Zirkonium- oder Aluminiumständigen Alkoxygruppen ab, wobei die Methoxygruppe am schnellsten hydrolysiert und mit steigender Kettenlänge oder mit zunehmender Verzweigung eine Verlangsamung eintritt.

Hydrolyse und Polykondensation konnen durch Zusatz von Basen, wie z.B. Ammoniak, oder auch von Säuren, wie z.B. HCl, aber auch durch Verwendung eines gängigen Kondensationskatalysators, wie z. B. Dibutylzinndiacetat, beschleunigt werden. Um ein unterschiedliches Hydrolyse- und Polykondensationsverhalten der Silanmonomeren nach Formel (4) und der Vernetzerkomponente nach Formel (6) auszugleichen, können nach einer vorzugsweisen Herstellungsvariante der Erfindung die Monomeren zunächst vorkondensiert werden. Hierzu wird das Silan nach Formel (4) und der oder die Vernetzer nach Formel (6) ohne oder unter Verwendung eines Lösungsmittels, z. B. unter Verwendung eines zu den Alkoxygruppen korrespondierenden Alkohols mit 1 bis 5 C-Atomen (nach Anspruch 4), in Gegenwart einer innerhalb des vorgegebenen Vorkondensationszeitraumes nicht zur vollständigen Hydrolyse ausreichenden Menge Wasser, vorzugsweise in Gegenwart von 1 bis 100 Mol% der hierzu benötigten Menge, über einen Zeitraum von 5 Minuten bis zu 72 Stunden bei Raumtemperatur bis 200° C, gegebenenfalls unter Zusatz eines Kondensationskatalysators, vorkondensiert und dann nach Zusatz einer weiteren, mindestens für die vollständige Hydrolyse und Kondensation ausreichenden Menge Wassers und gegebenenfalls weiteren Lösungsmittels weiter nach den im Anspruch 3 festgelegten Maßnahmen verfahren.

Um den Vorkondensationseffekt zu begünstigen, kann also ein Kondensationskatalysator zugesetzt werden. Bevorzugt wird Ammoniak, Salzsäure, Essigsäure oder Phosphorsäure verwendet.

Nach erfolgter Vorkondensation wird die vollständige Hydrolyse und Kondensation wie beschrieben durchgeführt. Die Vorkondensation kann natürlich auch unter einem Druck durchgeführt werden, der der Summe der Partialdrucke der Reaktionskomponenten entspricht.

Bei speziellen Anwendungen oder besonders erwünschten physikalischen Eigenschaften der erfindungsgemäß vernetzten Organopolysiloxanthioharnstoff-Derivate kann es sich nach einer weiteren erfindungsgemäßen Herstellungsvariante als vorteilhaft erweisen, die Monomerkomponente nach Formel (4) und den oder die Vernetzer nach Formel (6) jeweils unabhängig voneinander vorzukondensieren, Dieses Vorgehen führt zur Bildung von Polymeren, bei denen die Polymereinheiten nach Formel (1) und (3) in Form von Blöcken vorliegen. Dieses Verfahren sieht vor, daß eine Silankomponente der Formel (4) und der oder die Vernetzer nach Formel (6) jeweils voneinander unabhängig, ohne oder unter Verwendung eines Lösungsmittels, z. B. unter Verwendung eines zu den Alkoxygruppen korrespondierenden Alkohols mit 1 bis 5 C-Atomen (nach Anspruch 4), in Gegenwart einer innerhalb des vorgegebenen Vorkondensationszeitraumes nicht zur vollständigen Hydrolyse ausreichenden Menge Wasser, vorzugsweise in Gegenwart von 1 bis 100 Mol% der hierzu benötigten Menge, über einen Zeitraum von 5 Minuten bis zu 72 Stunden, insbesondere 5 Minuten bis 24 Stunden, bei Raumtemperatur bis 200° C gegebenenfalls unter Zusatz eines Kondensationskatalysators vorkondensiert und nach Vereinigung der vorkondensierten Komponenten und nach Zusatz einer weiteren, zumindest für die vollständige Hydrolyse und Kondensation ausreichenden Menge Wassers sowsie gegebenenfalls weiteren Lösungsmittels weiter nach den in Anspruch 3 festgelegten Maßnahmen verfahren wird. Auch bei dieser Vorkondensation kann einer der beschriebenen Vorkondensationskatalysatoren verwendet oder die Vorkondensation unter Druck durchgeführt werden.

Nach einer weiteren erfindungsgemäßen Herstellungsvariante werden Produkte erhalten, bei denen die Polymereinheiten nach Formel (1) und (3) teilweise in Form von Blöcken vorliegen, d. h. nach dieser Variante wird stets mindestens eine Monomerkomponente nach Formel (4) oder (6), wie vorstehend beschrieben, vorkondensiert und mindestens eine Monomerkomponente nach Formel (4) oder (6) nicht vorkondensiert. Anschließend werden vorkondensierte und nicht vorkondensierte Komponenten miteinander vereinigt und nach Zusatz weiteren Wassers sowie gegebenenfalls weiteren Lösungsmittels wird die vollständige Hydrolyse und Polykondensation der Gesamtmischung wie vorstehend beschrieben durchgeführt. Die weitere Behandlung des dabei gebildeten Polykondensates gestaltet sich dann wie bei den anderen erfindungsgemäßen Verfahrensweisen.

Diese Variante ist demnach dadurch gekennzeichnet, daß man die monomere Komponente nach Formel (4) oder den oder die Vernetzer nach Formel (6) 5 Minuten bis 72 Stunden ohne oder unter Verwendung eines in Anspruch 4 genannten Lösungsmittels, in Gegenwart einer, innerhalb des vorgegebenen Vorkondensationszeitraumes nicht zur vollständigen Hydrolyse ausreichenden Menge Wasser, vorzugsweise in Gegenwart von 1 bis 100 Mol% der hierzu benötigten Menge, über einen Zeitraum von 5 Minuten bis zu 24 Stunden bei Raumtemperatur bis 200° C vorkondensiert und anschließend die vorkondensierten und nicht vorkondensierten Komponenten vereinigt und dann nach Zusatz einer weiteren, zumindest für die vollständige Hydrolyse und Kondensation ausreichenden Menge Wassers und gegebenenfalls weiteren Lösungsmittels weiter nach den in Anspruch 3 festgelegten Maßnahmen verfährt.

Charakterisiert sind die neuen Organopolysiloxan-Thioharnstoff-Derivate insbesondere anhand der quantitativen Hydrolyseausbeuten, der Elementaranalysen und durch ihr chemisches Verhalten.

Zwischen den nach den unterschiedlichen Herstellungsverfahren erhaltenen Copolykondensaten besteht rein optisch kein Unterschied. Je nach Vorbehandlung besitzen die erfindungsgemäßen Polymeren Oberflächen von 0,1 bis 1000 m²/g und Teilchengrößendurchmesser von ca. 1 cm bis 1 µm. Ein bevorzugter Teilchengrößenbereich ist dabei ohne weiteres einstellbar.

Die Zersetzungspunkte für die neuen polymeren Thioharnstoffe sind natürlich unterschiedlich, Generell liegen sie jedoch an der Luft bei deutlich über 100° C und unter Schutzgasatmosphäre bei über 150° C.

Ein weiterer wichtiger Gegenstand der Erfindung für die erfindungsgemäßen polymeren Thioharnstoffe besteht in der Verwendung zur Entfernung von gelösten Metallen aus einer flüssigen wäßrigen oder organischen Phase nach dem statischen oder dynamischen Prinzip. Natürlich zeigen die polymeren Thioharnstoffe dabei vergleichbare Affinitäten zu den verschiedenen Metallen wie monomere, lösliche Thioharnstoffe vergleichbarer Struktur.

Die Erfindung wird nachfolgend anhand von Ausführungsbeispielen weiter erläutert.

### Beispiel 1

121,2 g (0,25 Mol) des Thioharnstoffes 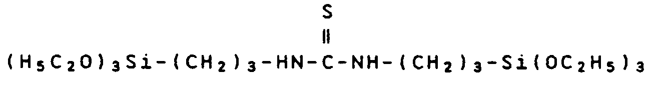
wurden in 150 ml Ethanol gelöst. Die klare Lösung wurde in einem 1 l-Dreihalskolben mit KPG-Rührer, Rückflußkühler und Tropftrichter überführt und auf Rückflußtemperatur aufgeheizt. Nach Zusatz von 50 ml entsalztem Wasser, das 0,1 Gew.% NH₃ enthielt, wurde solange unter Rückfluß gerührt, bis die Gelierung einsetzte (ca. 1 Stunde).

Das gebildete Gel wurde mit 200 ml Ethanol verdünnt und dann noch 2 Stunden unter Rückfluß gerührt. Dann wurde die Reaktionsmischung abgekühlt, der gebildete Feststoff über eine Saugnutsche abfiltriert, mit 2 x 100 ml Ethanol gewaschen und 16 Stunden bei 100° C in einem Trockenschrank getrocknet. Nach 2-stündiger Mahlung des Feststoffs in einer Kugelmühle und anschließender Siebung wurden 65,1 g (99,2 % der Theorie) polymeres Produkt, bestehend aus Polymereinheiten der Formel 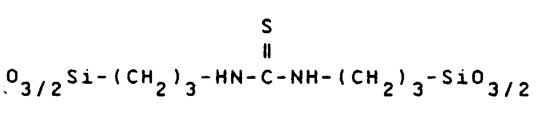
in einer Korngröße von angenähert 50 µm erhalten.

| Analysen: | % C | % H | % N | % S | Si% |
|---|---|---|---|---|---|
| Theorie: | 32,0 | 5,4 | 10,7 | 12,2 | 21,4 |
| Gefunden: | 30,8 | 5,2 | 10,3 | 12,7 | 20,7 |

Spezifische Oberfläche: 456 m²/g

### Beispiel 2

Ausgehend von 121,2 g (0.25 Mol) des Thioharnstoffs 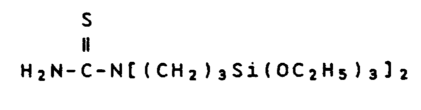
wurden genau analog zu Beispiel 1 64,8 g (98.8 % der Theorie) eines polymeren Harnstoffs, bestehend aus Polymereinheiten der Formel 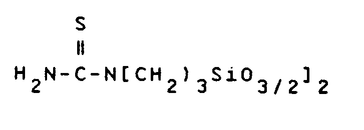
in einer Korngröße von angenähert 50 µm bis 150 µm erhalten.

| Analysen: | % C | % H | % N | % S | % Si |
|---|---|---|---|---|---|
| Theorie: | 32,0 | 5,4 | 10,7 | 12,3 | 21,4 |
| Gefunden: | 31,2 | 5,0 | 10,0 | 12,0 | 21,0 |

Spezifische Oberfläche: 488 m²/g

### Beispiel 3

42,9 g (0, 1 Mol) des Thioharnstoffderivates 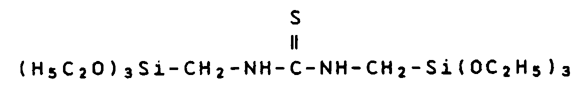
und 104,2 g (0,5 Mol) Si(OC₂H₅)₄ wurden in 200 ml Ethanol gelöst. Die Lösung wurde in einen 1 l-Dreihalskolben überführt und mit 30 ml entsalztem Wasser versetzt, das mit verdünnter Salzsäure auf pH3 eingestellt worden war. Die Lösung wurde unter Rühren auf Rückflußtemperatur aufgeheizt und solange bei dieser Temperatur gerührt, bis die Gelierung einsetzte. Das gebildete Gel wurde mit 100 ml Ethanol verdünnt, noch 2 Stunden bei Rückflußtemperatur gerührt und dann der Feststoff abfiltriert und 2 mal mit je 150 ml Ethanol gewaschen. Nach 12-stündiger Trocknung bei 120° C unter N₂-Atmosphäre wurden 50,3 g (99,3 % der Theorie) eines polymeren Thioharnstoffs, bestehend aus Polymereinheiten der Formel 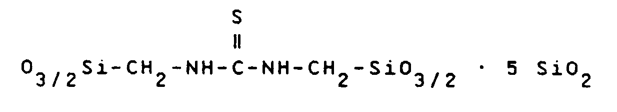
erhalten.

| Analysen: | % C | % H | % N | % S | % Si |
|---|---|---|---|---|---|
| Theorie: | 7,1 | 1,2 | 5,5 | 6,3 | 38,8 |
| Gefunden: | 6,7 | 1,0 | 5,2 | 6,0 | 38,0 |

Spezifische Oberfläche: 526 m²/g

### Beispiel 4

137,8 g (0,2 Mol) des Thioharnstoffderivates

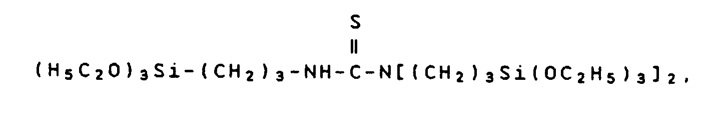

41,7 g (0,2 Mol) Si(OC₂H₅)₄ und 29,7 g (0,2 Mol) (H₃C)₂Si(OC₂H₅)₂ wurden in 100 ml Ethanol gelöst. In einem 2 1-Dreihalskolben mit KPG-Rührer, Rückflußkühler und Tropftrichter wurde die Lösung auf Rückflußtemperatur aufgeheizt und mit 3 ml 0,1n HCl-Lösung versetzt. Nachdem die Lösung weitere 2 Stunden unter Rückfluß gerührt worden war, wurden 50 ml entsalztes Wasser zugegeben. Kurze Zeit nach der Wasserzugabe gelierte der Ansatz bei 75° C, Nach Verdünnung mit 300 ml Ethanol wurde noch 1 Stunde refluxiert, dann abgekühlt, der Feststoff abfiltriert, mit 2 x 100 ml Ethanol gewaschen und 15 Stunden bei 85° C getrocknet. Erhalten wurden 94,3 g (96,3 % der Theorie) polymeres Produkt, bestehend aus Polymereinheiten der Formel

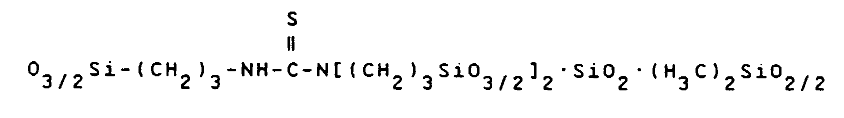

| Analysen: | % C | % H | % N | % S | % Si |
|---|---|---|---|---|---|
| Theorie: | 29,4 | 5,1 | 5,7 | 6,5 | 28,7 |
| Gefunden: | 29,0 | 4,8 | 5,3 | 6,2 | 28,2 |

Spezifische Oberfläche: 521 m²/g

### Beispiel 5

130,6 g (0.2 Mol) des Thioharnstoffderivates 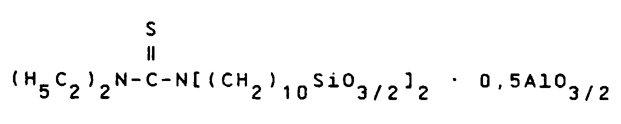
wurden mit 100 ml n-Butanol in einem 1 l Dreihalskolben mit KPG-Rührer, Rückflußkühler und Tropftrichter vereinigt. Die Lösung wurde mit 3 ml 1n HCl-Lösung vereinigt und 5 Stunden bei 100° C vorkondensiert. Anschließend wurden 24,6 g (0,1 Mol) Al(OC₄H₉)₃ und weitere 20 ml Wasser zugegeben und solange bei ca. 80° C weiter gerührt, bis die Gelierung einsetzte. Der gebildete Feststoff wurde mit 100 ml Butanol verdünnt und die gesamte Reaktionsmischung in einem Autoklaven noch 5 weitere Stunden bei 150° C gerührt, dann abfiltriert und 3 mal mit je 100 ml Methanol gewaschen. Nach 15-stündiger Trocknung bei 120° C unter N₂-Atmosphäre wurden 102, 1 g (94,5 % der Theorie) polymeres Produkt, bestehend aus Einheiten der Formel 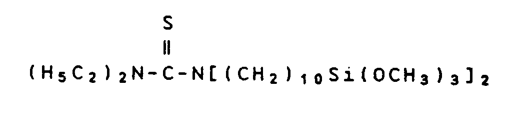
erhalten.

| Analysen: | % C | % H | % N | % S | % Si | %Al |
|---|---|---|---|---|---|---|
| Theorie: | 55,6 | 9,3 | 5,2 | 5,9 | 10,4 | 5,0 |
| Gefunden: | 54,7 | 8,8 | 5,0 | 5,7 | 9,7 | 4,7 |

Spezifische Oberfläche: < 1 m²/g

### Beispiel 6

110,6 g (0,2 Mol) des Thioharnstoffderivates 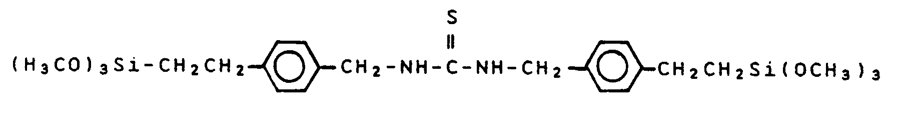
wurden in 50 ml Methanol gelöst und mit 3 ml 1n-HCl-Lösung versetzt. Gleichzeitig wurden 119,0 g (0,6 Mol) 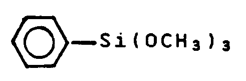
ebenfalls in 50 ml Methanol gelöst und mit 3 ml 1n HCl-Lösung versetzt. Beide Lösungen wurden unabhängig voneinander jeweils 2 Stunden bei Rückflußtemperatur gerührt und dann vereinigt. Die vereinigten Lösungen wurden mit weiteren 100 ml Methanol und 60 ml Wasser versetzt und solange weiter refluxiert, bis die Gelierung einsetzte. Nach der Verdünnung mit 200 ml Methanol wurde noch 1 Stunde unter Rückfluß gerührt und dann analog zu Beispiel 7 wurden 159,2 g (99,2 % der Theorie) polymeres Produkt, bestehend aus Polymereinheiten der Formel 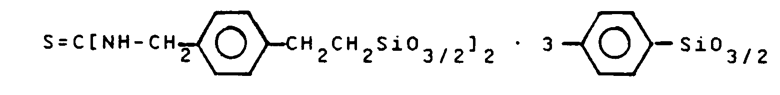
erhalten.

| Analysen: | % C | % H | % N | % S | % Si |
|---|---|---|---|---|---|
| Theorie: | 55,4 | 4,6 | 3,5 | 4,0 | 17,5 |
| Gefunden: | 54,7 | 4,1 | 3,2 | 3,8 | 16,9 |

Spezifische Oberfläche: 85 m²/g

### Beispiel 7

5 g des nach Beispiel 1 hergestellten polymeren Thioharnstoff-Derivates wurden in 100 ml Wasser suspendiert. in denen 40 mg Palladium als Na₂PdCl₄ gelöst waren. Die Suspension wurde 1 Stunde bei Raumtemperatur gerührt und dann der Feststoff abfiltriert. Eine Analyse des Filtrats ergab nur noch einen Palladiumgehalt von 0,1 mg.

### Beispiel 8

5 g des nach Beispiel 2 hergestellten polymeren Thioharnstoffs wurden 2 Stunden in 100 ml Ethanol, in denen 30 mg Rhodium als RhCl₃ gelöst waren, bei Rückflußtemperatur gerührt. Nach dem Abfiltrieren des Feststoffs ergab eine Analyse nur noch einen Rhodiumgehalt von 0,5 mg.

### Beispiel 9

5 g des nach Beispiel 3 hergestellten polymeren Thioharnstoffs wurden 2 Stunden in 100 ml Wasser suspendiert, in denen 10 mg Quecksilber als HgCl₂ gelöst waren. Eine Analyse des Filtrats ergab einen Rest-Quecksilbergehalt von 0,1 mg.

### Beispiel 10

10 g des nach Beispiel 4 hergestellten Thioharnstoffs mit einer Korngröße von 0,2 - 0,8 mm wurden in eine Säule mit einem Innendurchmesser von 15 mm überführt. Die Säule wurde mit 300 ml von Methanol, in denen 50 mg Silber als AgNO₃ gelöst waren, innerhalb von 1 Stunde beschickt. Eine Analyse der durchgesetzten Lösung ergab einen Rest-Silber-Gehalt von 0,2 mg.

## Patentansprüche

1. Organopolysiloxan-Thioharnstoff-Derivate, aufgebaut aus Einheiten der Formel 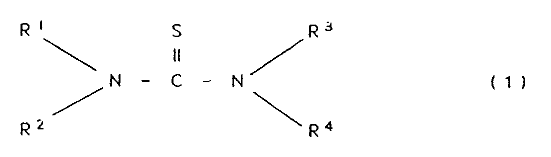 wobei
R¹ für eine Gruppe der Formel 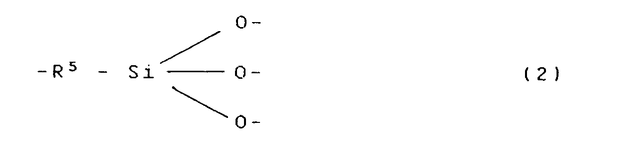 steht, in der R⁵ direkt an das Stickstoffatom gebunden ist und eine Alkylengruppe mit 1 bis 10 C-Atomen oder eine Cycloalkylengruppe mit 5 bis 8 C-Atomen oder ein Rest der Formel 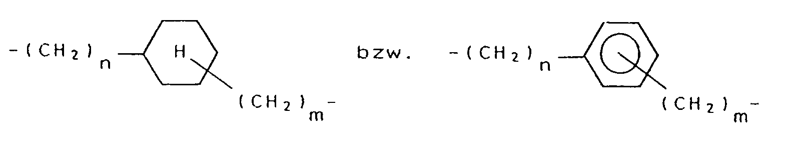 mit
n = 1 - 6 (Anzahl stickstoffständiger Methylengruppen)
m = 0 - 6 (Anzahl siliciumständiger Methylengruppen)
ist,
wobei R² dieselbe Bedeutung wie R¹ hat oder für H steht,
R³ und R⁴ ebenfalls dieselbe Bedeutung wie R¹ haben oder für H oder eine lineare oder verzweigte Alkylgruppe mit 1 bis 5 C-Atomen stehen und gleich oder verschieden sein können und wobei stets mindestens zwei, aber höchstens drei Gruppen nach Formel (2) an die Einheiten nach Formel (1) gebunden sind, die freien Valenzen der an das Siliciumatom gebundenen Sauerstoffatome wie bei Kieselsäuregerüsten durch Siliciumatome weiterer Gruppen der Formel (2), und/oder über die Metallatome in einem oder mehreren vernetzenden Brückengliedern der folgenden allgemeinen Formeln (3) 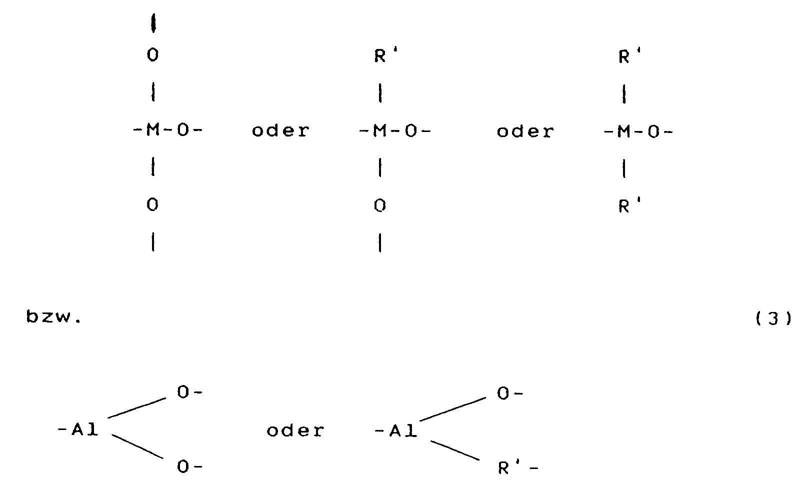 abgesättigt sind, wobei M ein Silicium-, Titan- oder Zirkoniumatom und R' eine Phenylgruppe oder eine lineare oder verzweigte Alkylgruppe mit 1 bis 5 C-Atomen ist und das Verhaltnis der Siliciumatome aus den Gruppen der allgemeinen Formel (2) zu den Metallatomen in den Brückengliedern nach (3) 1 : 0 bis 1 : 10 beträgt.

2. Organopolysiloxan-Thioharnstoff-Derivate gemäß Anspruch 1,
**dadurch gekennzeichnet,**
daß die Einheiten der Formel (2) eine Gruppe der Formel
-(CH₂)₃ - SiO_{3/2}
darstellen.

3. Verfahren zur Herstellung der Verbindungen gemäß Anspruch 1 oder 2,
**dadurch gekennzeichnet,**
daß man eine monomere Thioharnstoffverbindung der Formel 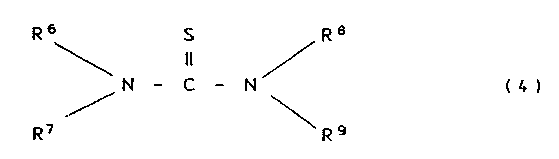 wobei R⁶ für eine Gruppe der allgemeinen Formel
-R⁵ - Si(OR¹⁰)₃ (5)
steht und R⁵ dieselbe Bedeutung wie in Formel (2) hat, R¹⁰ für eine lineare oder verzweigte Alkylgruppe mit 1 bis 5 C-Atomen steht,
R⁷ dieselbe Bedeutung wie R⁶ hat oder für H steht,
R⁸ und R⁹ ebenfalls dieselbe Bedeutung wie R⁶ haben oder für H oder eine lineare oder verzweigte Alkylgruppe mit 1 bis 5 C-Atomen stehen und gleich oder verschieden sein können und wobei stets mindestens 2, aber höchstens 3 Gruppen nach Formel (5) an die Einheiten nach Formel (4) gebunden sind, gegebenenfalls nach Zusatz eines oder mehrerer Vernetzer der allgemeinen Formel
M(OR)₂₋₄ R'₀₋₂ bzw. Al(OR)₂₋₃ R'₀₋₁ (6)
wobei M ein Silicium-, Titan-, oder Zirkonatom, R' eine lineare oder verzweigte Alkylgruppe mit 1 bis 5 C-Atomen oder eine Phenylgruppe ist und R eine lineare oder verzweigte Alkylgruppe mit 1 bis 5 C-Atomen bedeutet, wobei das Verhältnis der Siliciumatome aus den Gruppen der allgemeinen Formel (5) zu den Metallatomen der Formel (6) 1 : 0 bis 1 : 10 beträgt, in einem weitgehend wassermischbaren, aber den Thioharnstoff nach Formel (4) und den gegebenenfalls vorhandenen Vernetzer nach Formel (6) lösenden üblichen Lösungsmittel auflöst und der Lösung unter Rühren eine zumindest für die vollständige Hydrolyse und Kondensation ausreichende Menge Wasser zufügt, das Reaktionsgemisch unter Weiterrühren bei einer bestimmten Temperatur im Bereich von Raumtemperatur bis 200° C geliert, den sich bildenden Feststoff gegebenenfalls nach Zusatz weiteren Lösungsmittels oder Wasser noch bis zu 48 Stunden bei Raumtemperatur bis 200° C, bei Normaldruck oder einem Druck, welcher der Summe der Partialdrucke bei der jeweiligen Temperatur entspricht, rührt, dann das gebildete Polykondensat nach gängigen Techniken von der flüssigen Phase abtrennt, gegebenenfalls wäscht, bei Raumtemperatur bis 250° C, gegebenenfalls unter Schutzgasatmosphäre oder im Vakuum trocknet, gegebenenfalls anschließend 1 bis 100 Stunden bei Temperaturen von 150 bis 300° C an der Luft, unter Schutzgasatmosphäre oder im Vakuum tempert, gegebenenfalls mahlt und/oder klassifiziert.

4. Verfahren gemäß Anspruch 3,
**dadurch gekennzeichnet,**
daß als Lösungsmittel bei der Hydrolyse Methanol, Ethanol, n- und i-Propanol, n- und i-Butanol oder n-Pentanol allein oder in Mischung verwendet wird.

5. Verfahren nach Anspruch 3,
**dadurch gekennzeichnet,**
daß man die Hydrolyse mit Wasserüberschuß durchführt.

6. Verfahren zur Herstellung von vernetzten Verbindungen gemäß Anspruch 1 oder 2,
**dadurch gekennzeichnet,**
daß man das Monomer nach Formel (4) und den oder die Vernetzer nach Formel (6) ohne oder unter Verwendung eines in Anspruch 4 genannten Lösungsmittels, in Gegenwart einer, innerhalb des vorgegebenen Vorkondensationszeitraumes nicht zur vollständigen Hydrolyse ausreichenden Menge Wasser, vorzugsweise in Gegenwart von 1 bis 100 Mol% der hierzu benötigten Menge, über einen Zeitraum von 5 Minuten bis zu 72 Stunden bei Raumtemperatur bis 200° C, gegebenenfalls unter Zusatz eines Kondensationskatalysators, vorkondensiert und dann nach Zusatz einer weiteren, mindestens für die vollständige Hydrolyse und Kondensation ausreichenden Menge Wassers und gegebenenfalls weiteren Lösungsmittels weiter nach den im Anspruch 3 festgelegten Maßnahmen verfährt.

7. Verfahren zur Herstellung von vernetzten Verbindungen gemäß Anspruch 1 oder 2,
**dadurch gekennzeichnet,**
daß man die monomere Komponente nach Formel (4) und den oder die Vernetzer nach Formel (6) jeweils unabhängig voneinander 5 Minuten bis 72 Stunden ohne oder unter Verwendung eines in Anspruch 4 genannten Lösungsmittels, in Gegenwart einer, innerhalb des vorgegebenen Vorkondensationszeitraumes nicht zur vollständigen Hydrolyse ausreichenden Menge Wasser, vorzugsweise in Gegenwart von 1 bis 100 Mol% der hierzu benötigten Menge, über einen Zeitraum von 5 Minuten bis zu 24 Stunden bei Raumtemperatur bis 200° C, gegebenenfalls unter Zusatz eines Kondensationskatalysators, vorkondensiert und nach Vereinigung der vorkondensierten Komponenten und nach Zusatz einer weiteren, zumindest für die vollständige Hydrolyse und Kondensation ausreichenden Menge Wassers sowie gegebenenfalls weiteren Lösungsmittels weiter nach den in Anspruch 3 festgelegten Maßnahmen verfährt.

8. Verfahren zur Herstellung von vernetzten Verbindungen gemäß Anspruch 1 oder 2,
**dadurch gekennzeichnet,**
daß man die monomere Komponente nach Formel (4) oder den oder die Vernetzer nach Formel (6) 5 Minuten bis 72 Stunden ohne oder unter Verwendung eines in Anspruch 4 genannten Lösungsmittels, in Gegenwart einer, innerhalb des vorgegebenen Vorkondensationszeitraumes nicht zur vollständigen Hydrolyse ausreichenden Menge Wasser, vorzugsweise in Gegenwart von 1 bis 100 Mol% der hierzu benötigten Menge, über einen Zeitraum von 5 Minuten bis zu 24 Stunden bei Raumtemperatur bis 200° C vorkondensiert und anschließend die vorkondensierten und nicht vorkondensierten Komponenten vereinigt und dann nach Zusatz einer weiteren, zumindest für die vollständige Hydrolyse und Kondensation ausreichenden Menge Wassers und gegebenenfalls weiteren Lösungsmittels weiter nach den in Anspruch 3 festgelegten Maßnahmen verfährt.

9. Verwendung der erfindungsgemäßen Organopolysiloxan-Thioharnstoff-Derivate gemäß Anspruch 1 oder 2 zur Entfernung von gelösten Metallen aus wäßrigen oder organischen Phasen.

## Claims

1. Organopolysiloxane thiourea derivatives, constructed of units of the formula 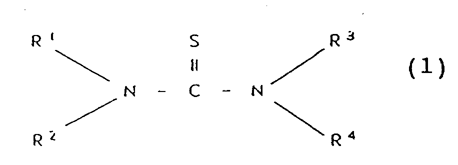 wherein
R¹ stands for a group of the formula 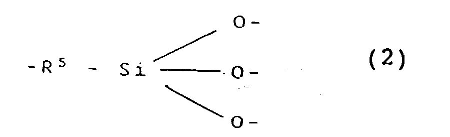 wherein R⁵ is bonded directly to the nitrogen atom and is an alkylene group having from 1 to 10 C atoms or a cycloalkylene group having from 5 to 8 C atoms or a radical of the formula 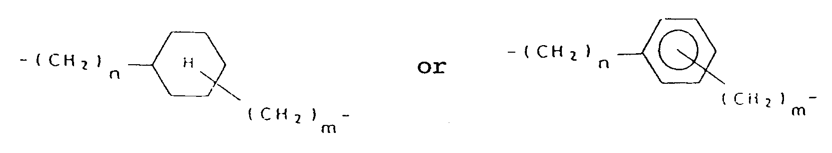 wherein
n = 1 - 6 (number of methylene groups attached to the nitrogen)
m = 0 - 6 (number of methylene groups attached to the silicon),
wherein R² has the same meaning as R¹ or stands for H,
R³ and R⁴ also have the same meaning as R¹ or stand for H or a linear or branched-chain alkyl group having from 1 to 5 C atoms, and may be identical or different, and wherein there are bonded to the units in accordance with formula (1) always at least two, but not more than three, groups in accordance with the formula (2), the free valencies of the oxygen atoms bonded to the silicon atom are satisfied as in silicic acid skeletons by silicon atoms of further groups of the formula (2), and/or are satisfied via the metal atoms in one or more cross-linking bridge members of the following general formulae (3) 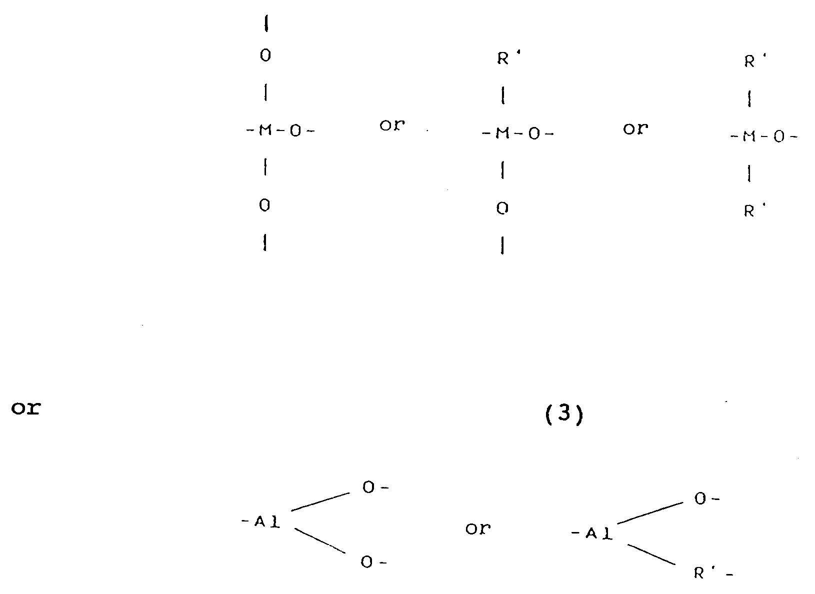 wherein M is a silicon, titanium or zirconium atom and R¹ is a phenyl group or a linear or branched-chain alkyl group having from 1 to 5 C atoms and the ratio of the silicon atoms from the groups of the general formula (2) to the metal atoms in the bridge members in accordance with (3) is from 1 : 0 to 1 : 10.

2. Organopolysiloxane thiourea derivatives according to Claim 1, characterised in that the units of the formula (2) represent a group of the formula
-(CH₂)₃-SiO_{3/2}.

3. Process for the preparation of compounds according to Claim 1 or 2, characterised in that a monomeric thiourea compound of the formula 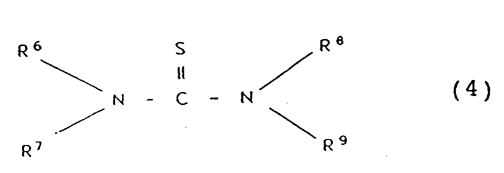 wherein R⁶ stands for a group of the general formula
-R⁵-Si(OR¹⁰)₃ (5)
and R⁵ has the same meaning as in formula (2), R¹⁰ stands for a linear or branched-chain alkyl group having from 1 to 5 C atoms,
R⁷ has the same meaning as R⁶ or stands for H,
R⁸ and R⁹ also have the same meaning as R⁶ or stand for H or a linear or branched-chain alkyl group having from 1 to 5 C atoms and may be identical or different, and wherein there are bonded to the units in accordance with formula (4) always at least 2, but not more than 3 groups in accordance with formula (5), optionally after addition of one or more cross-linking agents of the general formula
M(OR)₂₋₄R'₀₋₂ or Al(OR)₂₋₃R'₀₋₁ (6)
wherein M is a silicon, titanium or zirconium atom, R' is a linear or branched-chain alkyl group having from 1 to 5 C atoms or a phenyl group, and R denotes a linear or branched-chain alkyl group having from 1 to 5 C atoms, wherein the ratio of the silicon atoms from the groups of the general formula (5) to the metal atoms of the formula (6) is from 1 : 0 to 1 : 10, is dissolved in a conventional solvent which is largely water-miscible but which dissolves the thiourea in accordance with formula (4) and the optionally present cross-linking agent in accordance with formula (6), and a quantity of water which is at least sufficient for complete hydrolysis and condensation is added to the solution, with stirring, the reaction mixture is gelled at a predetermined temperature within the range from room temperature to 200°C, with further stirring, the solid which forms is stirred, optionally after addition of further solvent or water, for a further period of up to 48 hours at from room temperature to 200°C, at standard pressure or at a pressure corresponding to the sum of the partial pressures at the respective temperature, and the polycondensate formed is then separated from the liquid phase using conventional techniques, is optionally washed, is dried at from room temperature to 250°C, optionally in a protective gas atmosphere or under vacuum, is optionally subsequently tempered for from 1 to 100 hours at temperatures of from 150 to 300°C in air, in a protective gas atmosphere or under vacuum, and is optionally ground and/or classified.

4. Process according to Claim 3, characterised in that methanol, ethanol, n- and i-propanol, n- and i-butanol or n-pentanol are used, alone or in mixture, as the solvent in hydrolysis.

5. Process according to Claim 3, characterised in that the hydrolysis is performed with an excess of water.

6. Process for the preparation of cross-linked compounds according to Claim 1 or 2, characterised in that the monomer in accordance with formula (4) and the cross-linking agent or agents in accordance with formula (6) are pre-condensed with or without use of a solvent named in Claim 4, in the presence of a quantity of water which is insufficient for complete hydrolysis within the predetermined pre-condensation period, preferably in the presence of from 1 to 100 mol % of the quantity necessary for the purpose, over a period of from 5 minutes to 72 hours at from room temperature to 200°C, optionally with addition of a condensation catalyst, and after addition of a further quantity of water which is at least sufficient for complete hydrolysis and condensation and optionally of further solvent, the further procedure in accordance with the measures specified in Claim 3 is followed.

7. Process for the preparation of cross-linked compounds according to Claim 1 or 2, characterised in that the monomeric component according to formula (4) and the cross-linking agent or agents according to formula (6) in each case independently of one another are pre-condensed for from 5 minutes to 72 hours, with or without the use of a solvent named in Claim 4, in the presence of a quantity of water which is insufficient for complete hydrolysis within the predetermined pre-condensation period, preferably in the presence of from 1 to 100 mol % of the quantity necessary for the purpose, over a period of from 5 minutes to 24 hours at from room temperature to 200°C, optionally with addition of a condensation catalyst, and, after combining the pre-condensed components and after addition of a further quantity of water which is at least sufficient for complete hydrolysis and condensation, and optionally of further solvent, the further procedure in accordance with the measures specified in Claim 3 is followed.

8. Process for the preparation of cross-linked compounds according to Claim 1 or 2, characterised in that the monomeric component in accordance with formula (4) or the cross-linking agent or agents in accordance with formula (6) is/are precondensed for from 5 minutes to 72 hours with or without use of a solvent named in Claim 4, in the presence of a quantity of water which is insufficient for complete hydrolysis within the predetermined pre-condensation period, preferably in the presence of from 1 to 100 mol % of the quantity necessary for the purpose, for a period of from 5 minutes to 24 hours at from room temperature to 200°C, and the pre-condensed and non-pre-condensed components are subsequently combined and, after addition of a further quantity of water which is at least sufficient for complete hydrolysis and condensation, and optionally of further solvent, the further procedure in accordance with the measures specified in Claim 3 is then followed.

9. Use of the inventive organopolysiloxane thiourea derivatives according to Claim 1 or 2 for the removal of dissolved metals from aqueous or organic phases.

## Revendications

1. Dérivés d'organopolysiloxane-thiourée constitués à partir des unités de formule : 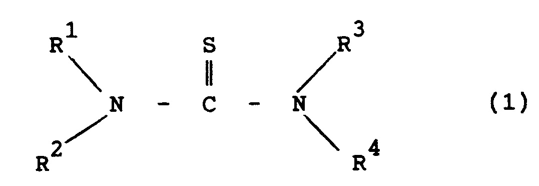 où :
R¹ est un groupe de formule : 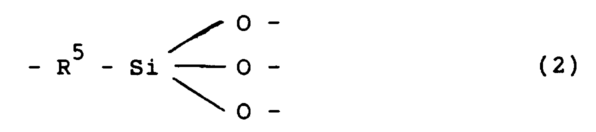 dans laquelle R⁵ est fixé directement à l'atome d'azote et est un groupe alkylène ave 1 à 10 atomes de C ou un groupe cycloalkylène de 5 à 8 atomes de C ou un reste de formule : 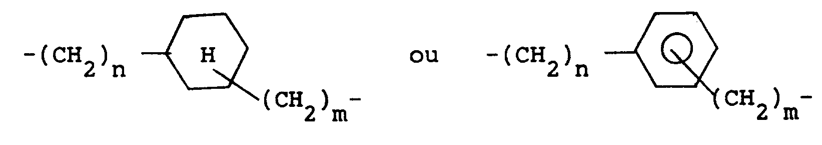 avec :
n = 1-6 (nombre de groupes méthylène fixés sur l'azote);
m = 0-6 (nombre de groupes méthylène fixés sur le silicium),
où R² a la même signification que R¹ ou représente H, R³ et R⁴ ont également la même signification que R¹ ou représentent H ou un groupe alkyle linéaire ou ramifié avec de 1 à 5 atomes de C et peuvent être identiques ou différents et où toujours 2 au moins, mais 3 groupes au plus de formule (2) sont liés aux unités de formule (1), les valences libres des atomes d'oxygène liés à l'atome de silicium sont saturées comme dans le réseau de la silice par des atomes de silicium d'autres groupes de formule (2), et/ou par les atomes métalliques dans un ou plusieurs ponts de réticulation de formules générales (3). 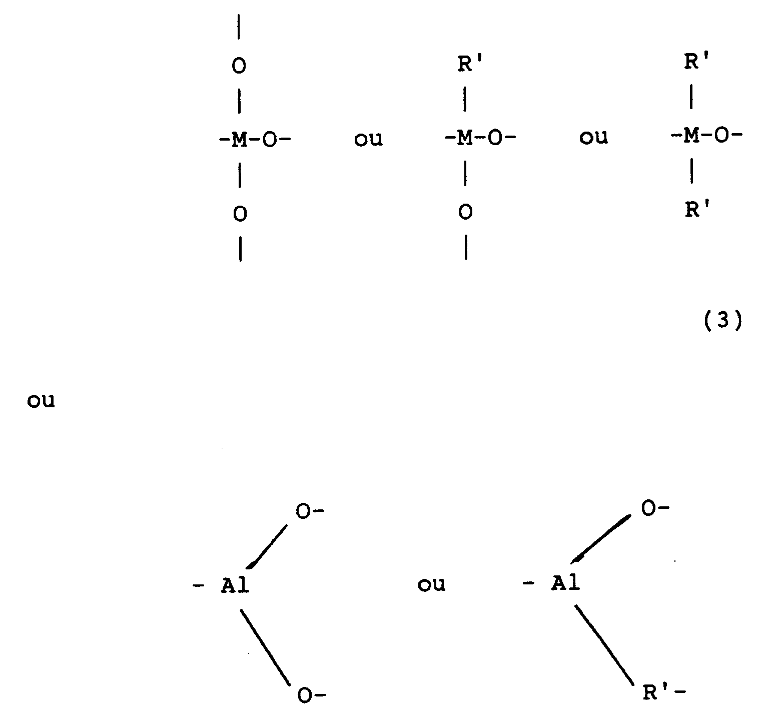 où M est un atome de silicium de titane ou de zirconium et R' est un groupe phényle ou un groupe alkyle linéaire ou ramifié de 1 à 5 atomes de C et la proportion des atomes de silicium des groupes de formule générale (2) aux atomes métalliques dans les ponts selon la formule (3) va de 1 : 0 à 1 : 10.

2. Dérivés d'organopolysiloxane-thiourée selon la revendication 1, caractérisés en ce que les unités de formule (2) représentent un groupe de formule :
-(CH₂)₃ -SiO_{3/2}

3. Procédé de préparation de composés selon la revendication 1 ou 2, caractérisé en ce que : on dissout un composé monomère de thiourée de formule : 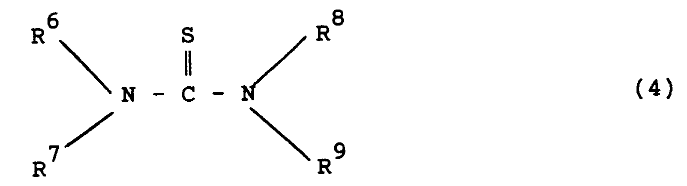 R⁶ est un groupe de formule générale : 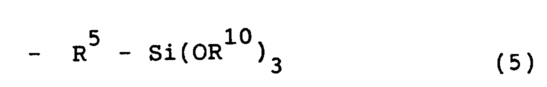 et R⁵ a la même signification que dans la formule (2), R¹⁰ est un groupe alkyle linéaire ou ramifié de 1 à 5 atomes de C,
R⁷ a la même signification que R⁶ ou représente H,
R⁸ et R⁹ ont également la même signification que R⁶ ou représentent un H ou un groupe alkyle linéaire ou ramifié de 1 à 5 atomes de C et peuvent être identiques ou différents et toujours 2 ou moins, mais 3 groupes au plus de formule (5) sont liés aux unités de formule (4), le cas échéant après addition d'un ou plusieurs agents réticulants de formule générale :
M(OR)₂₋₄ R'₀₋₂ ou Al(OR)₂₋₃ R'₀₋₁ (6)
dans laquelle M est un atome de silicium, titane ou zirconium.
R' est un groupe alkyle linéaire ou ramifié avec de 1 à 5 atomes de c ou un groupe phényle et R est un groupe alkyle linéaire ou ramifié avec de 1 à 5 atomes de C, la proportion d'atomes de silicium des groupes de formule générale (5) aux atomes de métal des formules (6) étant de 1 : 0 à 1 : 10, dans un solvant largement miscible dans l'eau, mais dissolvant la thiourée de formule (4) et l'agent réticulant de formule (6) et
on ajoute à la solution sous agitation une quantité d'eau au moins suffisante pour réaliser l'hydrolyse et la condensation complète,
on fait gélifier le mélange réactionnel en continuant d'agiter à une température déterminée dans l'intervalle compris entre la température ambiante et 200°C,
on mélange le solide qui se forme, le cas échéant après addition de solvant supplémentaire ou d'eau pendant une durée jusqu'à 48 heures à une température comprise entre la température ambiante et 200°C, sous pression atmosphérique, ou sous une pression qui correspond à la somme des pressions partielles à chaque température,
on agite, ensuite on sépare le polycondensat formé de la phase liquide par des techniques appropriées,
on lave le cas échéant, on sèche à une température comprise entre la température ambiante et 250°C, le cas échéant sous atmosphère protectrice de gaz ou sous vide,
on traite encore le cas échéant à l'air pendant 1 à 100 heures à des températures comprises entre 150 et 300°C, sous atmosphère protectrice de gaz ou sous vide, le cas échéant
on broie et/ou on tamise.

4. Procédé selon la revendication 3, caractérisé en ce qu'on utilise comme solvant lors de l'hydrolyse, du méthanol, de l'éthanol, du n- et de l'i-propanol, du n- et de l'i-butanol ou du n-pentanol, seuls ou en mélange.

5. procédé selon la revendication 3, caractérisé en ce qu'on réalise l'hydrolyse avec un excès d'eau.

6. Procédé de préparation de composés réticulés selon la revendication 1 ou 2, caractérisé en ce qu'on pré-condense le monomère de formule (4) et le ou les agents réticulants de formule (6), sans ou avec l'utilisation d'un solvant cité à la revendication 4 en présence d'une quantité d'eau insuffisante pour réaliser l'hydrolyse complète pendant le temps imparti à la pré-condensation, de préférence en présence de 1 à 100 % molaire de la quantité qui y serait nécessaire, pendant un temps de 5 minutes à 72 heures, à une température comprise entre la température ambiante et 200 °C, le cas échéant en ajoutant un catalyseur de condensation, et ensuite après addition d'une quantité supplémentaire d'eau, au moins suffisante pour réaliser l'hydrolyse et la condensation complète, et le cas échéant de solvant supplémentaire on utilise les dispositions prises à la revendication 3.

7. Procédé de préparation de composés réticulés selon la revendication 1 ou 2, caractérisé en ce qu on pré-condense les composants monomères de formule (4) et le ou les agents de réticulation de formule (6) séparément, entre 5 minutes et 72 heures, sans ou avec l'utilisation d'un solvant cité à la revendication 4, en présence d'une quantité d'eau insuffisante pour réaliser l'hydrolyse complète pendant le temps imparti à la pré-condensation, de préférence en présence de 1 à 100 % molaire de la quantité qui y serait nécessaire, pendant un temps de 5 minutes à 24 heures, à une température comprise entre la température ambiante et 200°C, le cas échéant en ajoutant un catalyseur de condensation, et après réunion des composants précondensés, et addition d'eau supplémentaire en quantité suffisante à l'hydrolyse et à la pré-condensation complète, et le cas échéant du solvant supplémentaire on réalise le procédé comme à la revendication 3.

8. Procédé de préparation de composés réticulés selon la revendication 1 ou 2, caractérisé en ce qu'on pré-condense les composants monomères de formule (4) ou le ou les agents de réticulation de formule (6) séparément, entre 5 minutes et 72 heures, sans ou avec l'utilisation d'un solvant cité à la revendication 4, en présence d'une quantité d'eau insuffisante pour réaliser l'hydrolyse complète pendant le temps imparti à la pré-condensation, de préférence en présence de 1 à 100 % molaire de la quantité qui y serait nécessaire, pendant un temps de 5 minutes à 24 heures, à une température comprise entre la température ambiante et 200°C, et ensuite on réunit les composants pré-condensés et non pré-condensés, et après addition d'eau supplémentaire en quantité suffisante à l'hydrolyse et à la pré-condensation complète, et le cas échéant du solvant supplémentaire, on réalise le procédé code à la revendication 3.

9. Utilisation des dérivés d'organopolysiloxane-thiourée de l'invention selon la revendication 1 ou 2, pour éliminer les métaux dissous dans les phases aqueuses ou organiques.
